# EUROPÄISCHE PATENTSCHRIFT

(11) **EP 0 838 367 B1**
(45) Veröffentlichungstag und Bekanntmachung des Hinweises auf die Patenterteilung: **04.12.2002**
(21) Anmeldenummer: 97115316.8
(22) Anmeldetag: 04.09.1997
(51) Int. Cl.: B60Q 1/04, B60Q 1/26

(54) **Scheinwerfer oder Leuchte zur Befestigung an einem oder mehreren Fahrzeugteilen**
Vehicle light or headlamp to be fixed to one or more vehicle body parts
Feu ou phare de véhicule destiné à être fixé a une ou plusieures parties d'un véhicule

(30) Priorität: 23.10.1996 DE 19643768; 25.06.1997 DE 19727005
(43) Veröffentlichungstag der Anmeldung: 29.04.1998
(73) Patentinhaber: Volkswagen Aktiengesellschaft, 38436 Wolfsburg (DE)
(72) Erfinder: Müller, Michael, 38518 Gifhorn (DE)

(56) Entgegenhaltungen:
- EP-A- 0 807 547
- DE-A- 1 655 486
- DE-C- 816 646
- DE-C- 19 511 137
- US-A- 3 225 189

## Beschreibung

Die Erfindung betrifft einen Scheinwerfer oder eine Leuchte zur Befestigung an einem oder mehreren Fahrzeugteilen, wobei der Scheinwerfer oder die Leuchte in einer durch mindestens zwei Karosserieteile gebildeten Öffnung haltbar ist.

Wird ein Scheinwerfer oder eine Leuchte, im folgenden nur noch Leuchte genannt, in einer Öffnung, die durch zwei oder mehrere Karosserieteile gebildet wird, dichtend angeordnet, und an einem oder mehreren Fahrzeugteilen befestigt, so kann es möglich sein, daß die Leuchte bei unterschiedlichen Verformungen der Fahrzeugteile nicht mehr dichtend in der Öffnung gehalten wird. Dies ist insbesondere ein Problem, wenn die Fahrzeugteile aus unterschiedlichen Werkstoffen hergestellt sind, und sich bei Beanspruchung beziehungsweise Erwärmung unterschiedlich verformen.

Weiterhin ist es möglich, daß die Befestigung der Leuchte bei der Verformung beschädigt wird, so daß die Befestigungsvorrichtung nach dem Zurückführen der Verformung wie z. B. beim Abkühlen, nicht mehr die ursprüngliche Stellung einnimmt. Zwischen Leuchte und Karosserieteil würde dann nach der Verformung ein Spalt vorliegen.

In der deutschen Patentschrift 43 21 389 C2 wird eine Befestigungsvorrichtung für ein Leuchtenband mit einer Leuchte und einer Blende vorgeschlagen, bei der Wärmedehnungen ausgeglichen werden und damit Wärmespannungen verhindert werden. Die Wärmedehnungen werden durch die Längsverschiebbarkeit der Verbindung zwischen der Leuchte und der Blende aufgenommen. Mit dieser Lösung werden in erster Linie Wärmedehnungen des Leuchtenbandes selbst aufgenommen. Der Ausgleich von unterschiedlichen Wärmedehnungen von angrenzenden Karosserieteilen oder Fahrzeugteilen aus unterschiedlichen Werkstoffen wird dort nicht erwähnt.

Die DE 816 646 C, die die Merkmale des Oberbegriffs von Anspruch 1 zeigt, hat eine Scheinwerferanordnung, insbesondere an Kraftfahrzeugen, zum Gegenstand, bei der ein in eine Öffnung einer Fahrzeugumkleidung eingesetzter Scheinwerfer unter Verwendung einer Zugfeder an einem Fahrzeugteil gehalten ist. Dabei überdeckt der Scheinwerfer zumindest abschnittsweise die Ränder der Fahrzeugumkleidung an der Öffnung von der Fahrzeugaußenseite her.

Aufgabe der Erfindung ist es nun, einen Scheinwerfer oder eine Leuchte zur Befestigung an einem oder mehreren Fahrzeugteilen nach dem Oberbegriff des Anspruchs 1 so zu gestalten, daß diese in einer durch mindestens zwei Karosserieteile gebildeten Öffnung anordbar ist, derart, daß unterschiedliche Verformungen, wie z. B. unterschiedliche Wärmedehnungen, hervorgerufen durch unterschiedliche Werkstoffe, keinen Einfluß auf den Sitz der Leuchte in der Öffnung haben.

Die Aufgabe wird erfindungsgemäß durch die Merkmale des Anspruchs 1 gelöst. Vorteilhafte Aus- und Weiterbildungen sind in den Unteransprüchen gegeben.

Erfindungsgemäß wird vorgeschlagen, daß eine Leuchte, die zwischen mehreren Fahrzeugteilen und mehreren Karosserieteilen durch Federkräfte erzeugende Federmittel gehalten und in einer durch die Karosserieteile gebildeten Öffnung angeordnet ist, wobei die Leuchte deren Ränder von der Fahrzeugaußenseite her zumindest abschnittsweise überdeckt, mit Rastelementen versehen ist, die in eingebautem Zustand die Ränder von der Fahrzeuginnenseite hintergreifen, so daß die Ränder klemmartig zwischen den Rastelementen und einer Lichtscheibe der Leuchte gehalten sind. Die Leuchte wird dadurch direkt an den Karosserieteilen gehalten und ist in der Lage, verformungsbedingten Lageveränderungen der Karosserieteile zu folgen, so daß die entstehende Spalte zwischen den Karosserieteilen und der Leuchte minimiert sind. Die die Federkräfte aufbringenden Federmittel können in einem gewissen Bereich den Verformungen nachgeben und dennoch die nötige Haltekraft auf die Leuchte ausüben. Diese wird so auch bei Veränderung des Abstandes der Karosserieteile zu den Befestigungspunkten an dem Fahrzeugteil dicht in der Öffnung gehalten. Sie wird auch im Anschluß an ein Rückverformen der Karosserieteile in die ursprüngliche Stellung durch die Federmittel dicht in der Öffnung der Karosserieteile gehalten.

Die Dichtheit zwischen der Leuchte und den Karosserieteilen kann insbesondere durch die Anordnung eines Dichtmittels verbessert werden.

Eine gleichmäßige Haltekraft der Leuchte in der Öffnung kann z. B. durch das Vorsehen von mehreren Befestigungsmitteln mit zugeordneten Federmitteln erreicht werden. Dadurch ist unabhängig von der Richtung der Verformung immer eine ausreichende Haltekraft gegeben.

Das Federmittel ist vorzugsweise ein in Falten gelegtes Bandmaterial. Das Bandmaterial weist weiterhin im wesentlichen senkrecht zu dem Federweg verlaufende Enden auf, mittels derer eine gute Krafteinleitung in das Federmittel ermöglicht wird, beziehungsweise das Bandmaterial einfach an dem Fahrzeugteil beziehungsweise der Leuchte befestigt werden kann.

Eine Weiterentwicklung der Erfindung besteht darin, daß das Befestigungsmittel einen Hohlraum aufweist, in dem das Bandmaterial angeordnet ist. In diesem Fall kann das Befestigungsmittel kostengünstig als einteiliges Spritzgußteil hergestellt werden Die gewünschten mechanischen Eigenschaften können dann durch das eingelegte Bandmatenal erreicht werden.

Das Bandmaterial hat weiterhin den Vorteil, daß wenn das Befestigungsmittel mit dem eingelegten Bandmaterial mittels einer Schraubverbindung befestigt wird, daß Bandmaterial dem während des Festschraubens wirkenden Anzugsmoment ein entsprechendes Widerstandsmoment entgegenbringt. Das Befestigungsmittel mit dem Bandmaterial wird dadurch beim Festschrauben nicht beziehungsweise nur begrenzt verdreht. Wäre das Federmittel z. B. eine Schraubenfeder, so müßte die Aufnahme der Schraubenfeder so ausgestaltet sein, daß ein Verdrehen der Schraubenfeder beim Festschrauben verhindert wird. Dies ist durch die Verwendung von Bandmaterial als Federmittel nicht notwendig.

Die Eindrehrichtung der Gewinde der Schraubverbindung zueinander verläuft vorteilhafterweise im wesentlichen parallel zu dem Federweg des Federmittels. Dadurch kann ein und dasselbe Befestigungsmittel auch bei Vorliegen von Fertigungsungenauigkeiten oder für unterschiedliche Fahrzeugtypen einfach verwendet werden. Für die Befestigung ist es lediglich wichtig, daß die Gewinde der Schraubverbindung teilweise ineinander greifen. Die eigentliche Haltekraft kann dann durch Festziehen der Schraubverbindung und Dehnung des Federmittels erzeugt werden.

Die Erfindung wird nachfolgend anhand eines Ausführungsbeispiels näher erläutert. Die Zeichnungen zeigen:
- Figur 1: Befestigung einer Leuchte in einer durch zwei Karosserieteile gebildeten Öffnung,
- Figur 2: Befestigungsmittel mit darin angeordnetem Federmittel, und
- Figur 3: Fahrzeug in Ansicht von hinten.

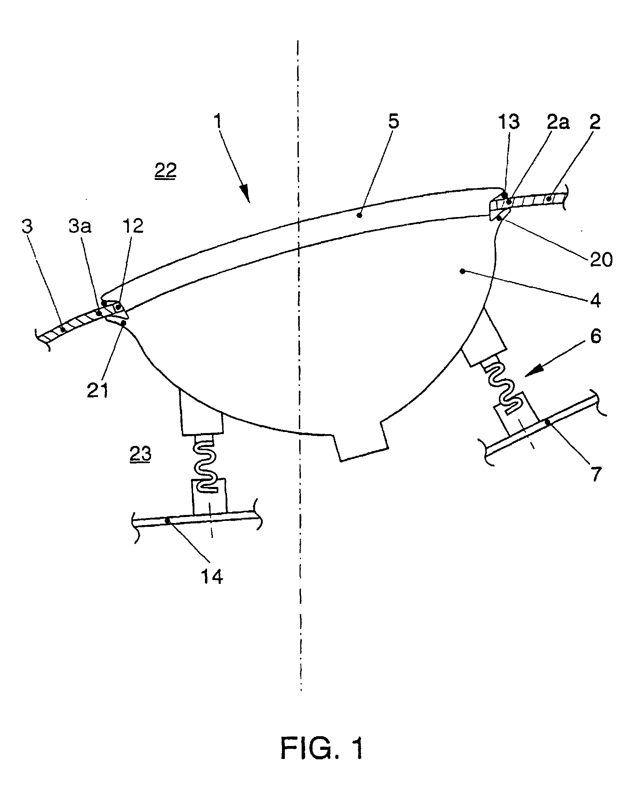

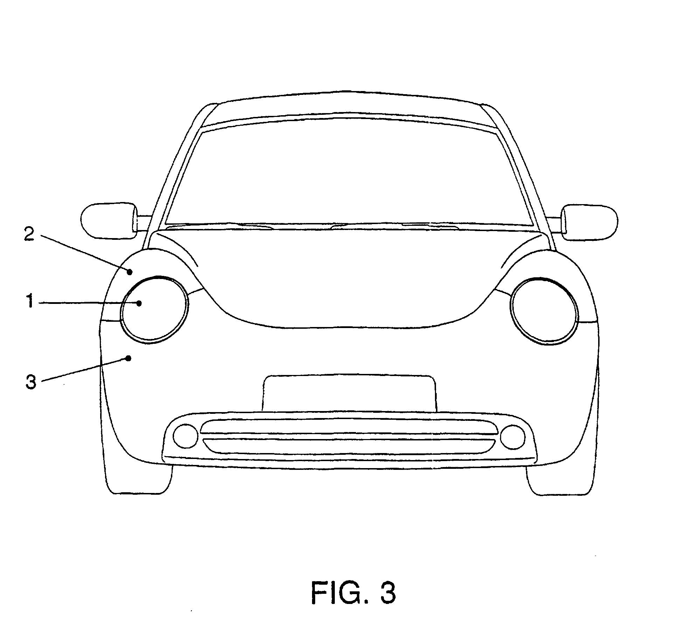

In Figur 1und Figur 3 ist eine Leuchte 1 zu erkennen, die in einer durch die Karosserieteile 2, 3 gebildeten Öffnung 12 gehalten wird. Bei den Karosserieteilen 2; 3 handelt es sich um einen Kotflügel und einen Stoßfänger. Der Stoßfänger besteht aus einem Kunststoff, z. B. EPDM und der Kotflügel aus einem Blech. Bei Temperaturerhöhung oder Belastung verformen sich beide Teile aufgrund der unterschiedlichen Materialeigenschaften unterschiedlich. Die Leuchte 1 weist eine Lichtscheibe 5 und ein Gehäuse 4 auf. Die Lichtscheibe 5 überdeckt die Ränder 2a, 3a der Karosserieteile 2, 3 zumindest abschnittsweise von der Fahrzeugaußenseite 23. Von der Fahrzeuginnenseite 22 hintergreifen die Rastelemente 20, 21 die Ränder 2a, 3a. Die Ränder 2a, 3a werden zwischen den Rastelementen 20, 21 und der die Ränder fahrzeugaußenseitig überdeckenden Lichtscheibe 5 klemmartig gehalten, wodurch wiederum die Leuchte 1 an den beiden Karosserieteilen 2, 3 gehalten wird. Zumindest eines der Rastelemente 20, 21 ist federnd ausgebildet. Sind ein oder einige Rastelemente 20, 21 formsteif ausgebildet, so wird der Rand 2a, 3a zuerst zwischen dem formsteifen Rastelement 20, 21 und der Lichtscheibe 5 eingeführt und anschließend die Leuchte 1 unter Ausführung einer Schwenkbewegung durch Verrasten des federnden Rastelementes 20, 21 hinter dem Rand 2a, 3a des Karosserieteiles 2, 3 befestigt. Treten Verformungen der Karosserieteile 2, 3 auf, so paßt sich die Leuchte diesen an, wodurch das Entstehen von Spalten zwischen Leuchte und den Karosserieteilen sicher verhindert wird. Zwischen der Lichtscheibe 5 und den Karosserieteilen 2, 3 ist zusätzlich ein Dichtmittel 13 vorgesehen. An dem Gehäuse 4 sind Befestigungsmittel 6 vorgesehen mit denen die Leuchte 1 an den Fahrzeugteilen 7, 14 haltbar ist.

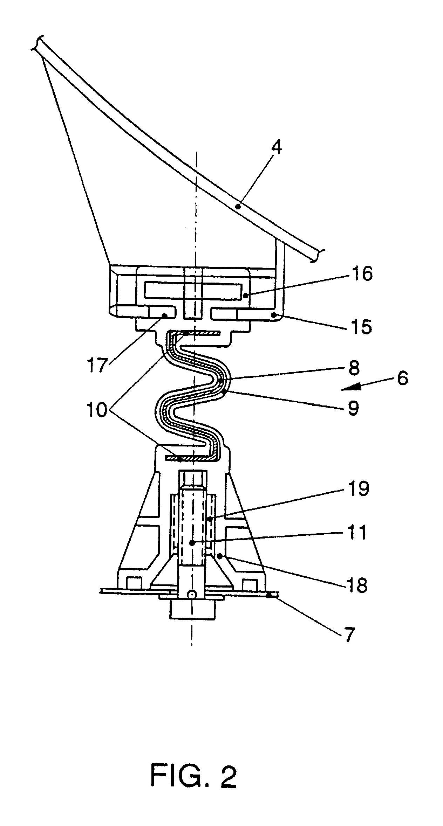

In der Figur 2 ist das Befestigungsmittel 6 mit dem darin angeordneten Federmittel 8 dargestellt. Das Befestigungsmittel 6 weist an seinem dem Gehäuse 4 zugewandten Ende 16 Ausnehmungen 17 auf, in die ein Ansatz 15 des Gehäuses 4 eingreift. Das Ende 16 kann z. B. rechteckig ausgebildet sein, wodurch eine Verdrehung des Endes 16 gegenüber dem Gehäuse 4 verhindert wird. In dem dem Fahrzeugteil 7 zugeordneten Ende 18 des Befestigungsmittels 6 ist ein Gewinde 19 vorgesehen. Das Befestigungsmittel 6 wird dann durch Einführen der Schraube 11 in eine Öffnung des Fahrzeugteiles 7 und Einschrauben in das Gewinde 19 mit dem Fahrzeugteil 7 verbunden. Zwischen dem Ende 16 und dem Ende 18 ist das Befestigungsmittel 6 hohl ausgeführt. In dem Hohlraum des Befestigungsmittels 6 ist das als Federmittel 8 wirkende Bandmaterial eingelegt. Das Bandmaterial 8 ist zwischen den Enden 16 und 18 in Falten gelegt und weist senkrecht zu dem Federweg verlaufende Enden 10 auf. Das Bandmaterial 8 kann entsprechend den gewünschten mechanischen Eigenschaften des Befestigungsmittels 6 dimensioniert werden und nimmt die zwischen Gehäuse 4 und Fahrzeugteil 7 wirkenden Zug- beziehungsweise Druckkräfte auf.

Verformen sich nun die Karosserieteile 2 und 3 unterschiedlich wie z. B aufgrund von unterschiedlichen Werkstoffen bei Erwärmung, dann werden die unterschiedlichen Verformungen durch das als Bandmaterial 8 ausgeglichen. Die Leuchte 1 wird durch die Federmittel 8 schwimmend in der Öffnung 12 der Karosserieteile 2, 3 gehalten und liegt auch bei unterschiedlichen Stellungen der Karosserieteile 2, 3 dicht an den Rändern der Karosserieteile 2, 3 an. Noch verbleibende Spalte können durch das Dichtmittel 13 ausgeglichen werden.

Die Einschraubrichtung der Schraube 11 in das Gewinde 19 liegt parallel zu dem Federweg des Bandmaterials 8. Beim Einschrauben der Schraube 11 in das Gewinde 19 wirkt das Widerstandsmoment des Bandmaterials 8 dem Anzugsmoment entgegen Das Bandmaterial 8 kann sich dadurch beim Einschrauben der Schraube 11 nicht beziehungsweise nur begrenzt verdrehen.

Das Befestigungsmittel 6 kann für unterschiedliche Fahrzeugtypen verwendet werden. Weiterhin können mit dem Befestigungsmittel 6 Fertigungsungenauigkeiten ausgeglichen werden, da das Befestigungsmittel 6 für unterschiedliche Abstände zwischen Gehäuse 4 und Fahrzeugteil 7 verwendbar ist. Dazu wird das Befestigungsmittel 6 zuerst mit dem Ende 16 an dem Ansatz 15 befestigt und anschließend durch Verschrauben des Endes 18 mit der Schraube 11 an dem Fahrzeugteil 7 befestigt. Dazu ist es notwendig das die Schraube 11 zumindest einen Gewindegang des Gewindes 19 ergreift. Das Heranziehen des Endes 18 an das Fahrzeugteil 7 erfolgt dann auf einfache Art und Weise durch Anziehen der Schraube 11. Das Bandmaterial 8 kann dann unterschiedlich weit gedehnt werden, wobei auch bei unterschiedlichen Dehnungen eine ausreichende Haltekraft durch das Bandmaterial 8 auf die Leuchte 1 ausgeübt wird.

Obwohl das Entstehen von Spalten zwischen den Karosserieteilen 2, 3 und der Leuchte 1 durch die Federkräfte als auch durch die klemmartige Befestigung der Leuchte 1 mit den Rastelementen 20, 21 sicher verhindert wird, bieten beide Lösungen für sich Vorteile. Die Spaltweiten können weiter minimiert werden, indem beide Lösungsvorschläge kombiniert werden. Durch die von den Federmitteln erzeugten Federkräfte wird die Lichtscheibe, ein den die Ränder 2a, 3a überdeckenden Bereich an die Karosserieteile 2, 3 gedrückt. Neben der nötigen Befestigungskraft wird außerdem durch die Anpreßkraft auf das Dichtmittel 13 die Öffnung abgedichtet. Durch die Befestigung mit den Rastelementen 20, 21 wird es ermöglicht, daß die Leuchte 1 auch bei außergewöhnlichen Belastungen oder bei Beschädigungen der Federmittel 8 spaltfrei in der Öffnung 12 gehalten wird.

## Patentansprüche

1. Scheinwerfer oder Leuchte (1) zur Befestigung an einem oder mehreren Fahrzeugteilen (7; 14), wobei der Scheinwerfer oder die Leuchte (1) ein Federmittel (8) aufweist, in einer durch mindestens zwei Karosserieteile (2, 3) gebildeten Öffnung (12) mit Rändern (2a, 3a) haltbar ist und in eingebautem Zustand durch zwischen dem oder den Fahrzeugteilen (7; 14) und den die Öffnung (12) bildenden Karosserieteilen (2, 3) wirkende Federkräfte in der Öffnung (12) gehalten ist sowie die Ränder (2a, 3a) der Karosserieteile (2, 3) von der Fahrzeugaußenseite (22) zumindest abschnittsweise überdeckt, **dadurch gekennzeichnet, daß** der Scheinwerfer oder die Leuchte (1) mit Rastelementen (20, 21) versehen ist, die in eingebautem Zustand die Ränder (2a, 3a) von der Fahrzeuginnenseite (23) hintergreifen, so daß die Ränder (2a, 3a) klemmartig zwischen den Rastelementen (20, 21) und einer Lichtscheibe (5) des Scheinwerfers oder der Leuchte (1) haltbar sind.

2. Scheinwerfer oder Leuchte nach Anspruch 1, **dadurch gekennzeichnet, daß** der Scheinwerfer oder die Leuchte (1) ein Dichtmittel (13) aufweist, das zwischen dem Scheinwerfer oder der Leuchte (1) und dem Rand der Öffnung (12) vorgesehen ist.

3. Scheinwerfer oder Leuchte nach Anspruch 1, **dadurch gekennzeichnet, daß** die Federmittel (8) einem oder mehreren an dem Scheinwerfer oder der Leuchte (1) vorgesehenen Befestigungsmittel(n) (6) zugeordnet sind.

4. Scheinwerfer oder Leuchte nach Anspruch 1 oder 3, **dadurch gekennzeichnet, daß** ein Federmittel (8) ein in Falten gelegtes Bandmaterial ist.

5. Scheinwerfer oder Leuchte nach Anspruch 4, **dadurch gekennzeichnet, daß** das Bandmaterial (8) jeweils in einem Hohlraum des Befestigungsmittels (6) angeordnet ist.

6. Scheinwerfer oder Leuchte nach Anspruch 4 oder 5, **dadurch gekennzeichnet, daß** das Bandmaterial (8) im wesentlichen senkrecht zu dem Federweg verlaufende Enden (10) aufweist.

7. Scheinwerfer oder Leuchte nach Anspruch 3 oder 5, **dadurch gekennzeichnet, daß** Befestigungsmittel (6) drehfest an dem Scheinwerfer oder der Leuchte (1) oder dem Fahrzeugteil (7; 14) angeordnet ist und an dem jeweils anderen Teil (1; 7; 14) mittels einer Schraubverbindung haltbar ist.

8. Scheinwerfer oder Leuchte nach Anspruch 7, **dadurch gekennzeichnet, daß** der Verschiebeweg der Gewinde der Schraubverbindung zueinander im wesentlichen parallel zu dem Federweg des Federmittels (8) verläuft.

## Claims

1. Headlight or lamp (1) for fastening on one or more vehicle parts (7; 14), the headlight or the lamp (1) having a spring means (8), being retainable in an opening (12) formed by at least two bodywork parts (2, 3) by means of edges (2a, 3a) and, in the fitted state, being retained in the opening (12) by spring forces which act between the vehicle part or parts (7; 14) and the bodywork parts (2, 3) which form the opening (12), and at least in some sections overlapping the edges (2a, 3a) of the bodywork parts (2, 3) from the outside (22) of the vehicle, **characterized in that** the headlight or the lamp (1) is provided with latching elements (20, 21) which, in the fitted state, engage behind the edges (2a, 3a) from the inside (23) of the vehicle, with the result that the edges (2a, 3a) can be retained in a clip-like manner between the latching elements (20, 21) and a light cap (5) of the headlight or the lamp (1).

2. Headlight or lamp according to Claim 1, **characterized in that** the headlight or the lamp (1) has a sealant (13) which is provided between the headlight or the lamp (1) and the edge of the opening (12).

3. Headlight or lamp according to Claim 1, **characterized in that** the spring means (8) are assigned to one or more fastening means (6) provided on the headlight or the lamp (1).

4. Headlight or lamp according to Claim 1 or 3, **characterized in that** a spring means (8) is a folded strip material.

5. Headlight or lamp according to Claim 4, **characterized in that** the strip material (8) is arranged in each case in a cavity of the fastening means (6).

6. Headlight or lamp according to Claim 4 or 5, **characterized in that** the strip material (8) has ends (10) running essentially perpendicularly with respect to the spring deflection.

7. Headlight or lamp according to Claim 3 or 5, **characterized in that** the fastening means (6) is arranged in a rotationally fixed manner on the headlight or the lamp (1) or the vehicle part (7; 14) and can be retained on the respective other part (1; 7; 14) by means of a screw connection.

8. Headlight or lamp according to Claim 7, **characterized in that** the path of displacement of the threads of the screw connection with respect to each other runs essentially parallel to the spring deflection of the spring means (8).

## Revendications

1. Phare ou feu (1) à fixer sur une ou plusieurs pièces de véhicule (7; 14), dans lequel le phare ou le feu (1) présente un moyen élastique (8), peut être maintenu dans une ouverture (12) avec des bords (2a, 3a) formée par au moins deux pièces de carrosserie (2, 3), est maintenu à l'état monté dans l'ouverture (12) par des forces élastiques agissant entre la ou les pièces de véhicule (7; 14) et les pièces de carrosserie (2, 3) formant l'ouverture (12) et recouvre au moins en partie les bords (2a, 3a) des pièces de carrosserie (2, 3) par le côté extérieur du véhicule (22), **caractérisé en ce que** le phare ou le feu (1) est pourvu d'éléments d'accrochage (20, 21) qui, à l'état monté, accrochent par l'arrière les bords (2a, 3a) par le côté intérieur du véhicule (23), de telle manière que les bords (2a, 3a) puissent être maintenus d'une façon pincée entre les éléments d'accrochage (20, 21) et une vitre (5) du phare ou du feu (1).

2. Phare ou feu suivant la revendication 1, **caractérisé en ce que** le phare ou le feu (1) présente un moyen d'étanchéité (13), qui est prévu entre le phare ou le feu (1) et le bord de l'ouverture (12).

3. Phare ou feu suivant la revendication 1, **caractérisé en ce que** les moyens élastiques (8) sont associés à un ou à plusieurs moyen(s) de fixation (6) prévu(s) sur le phare ou le feu (1).

4. Phare ou feu suivant la revendication 1 ou 3, **caractérisé en ce qu'**un moyen élastique (8) est une bande de matière pliée en zig-zag.

5. Phare ou feu suivant la revendication 4, **caractérisé en ce que** la bande de matière (8) est chaque fois disposée dans un espace creux du moyen de fixation (6).

6. Phare ou feu suivant la revendication 4 ou 5, **caractérisé en ce que** la bande de matière (8) présente des extrémités (10) orientées sensiblement perpendiculairement à la course élastique.

7. Phare ou feu suivant la revendication 3 ou 5, **caractérisé en ce que** le moyen de fixation (6) est disposé sans rotation sur le phare ou le feu (1) ou la pièce de véhicule (7; 14) et peut être maintenu sur l'autre pièce respective (1; 7; 14) au moyen d'un assemblage par vis.

8. Phare ou feu suivant la revendication 7, **caractérisé en ce que** la course d'avance du filet de l'assemblage par vis l'un par rapport à l'autre est sensiblement parallèle à la course élastique du moyen élastique (8).
